# EUROPÄISCHE PATENTSCHRIFT

(11) **EP 1 145 350 B1**
(45) Veröffentlichungstag und Bekanntmachung des Hinweises auf die Patenterteilung: **18.12.2002**
(21) Anmeldenummer: 99960804.5
(22) Anmeldetag: 22.10.1999
(51) Int. Cl.: H01M 8/00

(54) **VERFAHREN ZUR REGELUNG DER BRENNSTOFFKONZENTRATION IN EINEM ALKOHOL ODER ETHER ALS BRENNSTOFF UND WASSER ENTHALTENDEN BRENNSTOFFGEMISCH EINER BRENNSTOFFZELLE UND BRENNSTOFFZELLENSYSTEM**
METHOD FOR ADJUSTING THE FUEL CONCENTRATION OF A FUEL MIXTURE CONTAINING ALCOHOL OR ETHER AS FUEL AND WATER, USED BY A FUEL CELL AND A FUEL CELL SYSTEM
PROCEDE PERMETTANT DE REGLER LA CONCENTRATION EN COMBUSTIBLE D'UN MELANGE COMBUSTIBLE D'UNE PILE A COMBUSTIBLE, MELANGE CONTENANT UN ALCOOL OU UN ETHER COMME COMBUSTIBLE ET DE L'EAU, ET SYSTEME DE PILES A COMBUSTIBLE

(30) Priorität: 03.11.1998 DE 19850720
(43) Veröffentlichungstag der Anmeldung: 17.10.2001
(73) Patentinhaber: Forschungszentrum Jülich GmbH, 52425 Jülich (DE)
(72) Erfinder: MEISSNER, Dieter, D-52428 Jülich (DE); OETJEN, Hans-Friedrich, D-52441 Linnich (DE); MERGEL, Jürgen, D-52428 Jülich (DE)
(74) Vertreter: Naeven, Ralf, Dr.
(86) Internationale Anmeldenummer: DE9903384
(87) Internationale Veröffentlichungsnummer: WO00026978

(56) Entgegenhaltungen:
- EP-A- 0 181 569
- DE-A- 1 902 481
- DE-A- 3 508 153
- US-A- 3 425 873
- PATENT ABSTRACTS OF JAPAN vol. 012, no. 277 (E-640), 30. Juli 1988 (1988-07-30) -& JP 63 055864 A (HITACHI LTD), 10. März 1988 (1988-03-10)
- PATENT ABSTRACTS OF JAPAN vol. 005, no. 197 (E-086), 15. Dezember 1981 (1981-12-15) & JP 56 118273 A (NISSAN MOTOR CO LTD), 17. September 1981 (1981-09-17)

## Beschreibung

Die Erfindung betrifft ein Verfahren zur Regelung der Brennstoffkonzentration in einem Brennstoffgemisch für eine Brennstoffzelle, das von einem Alkohol oder einem Ether als Brennstoff und Wasser gebildet wird, sowie ein Brennstoffzellensystem, enthaltend mindestens eine, mit einem aus einem Alkohol oder einem Ether als Brennstoff und Wasser bestehenden Brennstoffgemisch betreibbare Brennstoffzelle, sowie mindestens einen mit jeweils einem steuerbaren Brennstoffeinlaß verbundenen Mischraum und mindestens eine, den mindestens einen Mischraum jeweils mit der mindestens einen Brennstoffzelle verbindende Brennstoffgemischzuleitung.

Brennstoffzellensysteme der eingangs genannten Art sind zum Zeitpunkt dieser Anmeldung bereits mehr als 30 Jahre bekannt (s. z.B. *W. Vielstich; "Brennstoffelemente" Verlag Chemie, Weinheim 1965, Seiten* 73-93 und *L. Oniciu; "Fuel Cells", Abacus-Press, Kent, 1976, Seiten 93*-98). Einer Brennstoffzelle wird der Alkohol, z.B. Methanol, als Brennstoff mit Wasser zu einem Brennstoffgemisch vermengt zugeführt und dort unmittelbar in elektrische Energie umgesetzt. Alkoholgehalte zwischen 1Vol.-% und 5Vol.-% im Brennstoffgemisch haben sich für den Betrieb einer solchen Brennstoffzelle als besonders günstig erwiesen. Ein Problem beim Betrieb derartiger Brennstoffzellen ist es, die Alkoholkonzentration des Brennstoffgemisches möglichst konstant zu halten. Dies gilt in gleicher Weise für Alkohol wie für Ether als Brennstoff verwendende Brennstoffzellen.

Aus der DE 197 01 560 A1 wird ein Brennstoffzellensystem offenbart, bei dem ein flüssiges Brennstoffgemisch bestehend aus einem Brennstoff und einem Kühlmittel dem Anodenraum einer Brennstoffzelle zugeführt ist. Die DE 196 28 888 C1 offenbart eine Brennstoffzelle, die unter anderem mit einem Brennstoffgemisch aus Brennstoff und Wasser betrieben werden kann. Dabei wird die Effizienz der Brennstoffzelle durch einen alternierenden Betriebsdruck erhöht. Aus der DE 44 25 634 C1 sind ein Verfahren und eine Vorrichtung zum dosierten Zuführen von Methanol und/oder Wasser aus einem Vorratsbehälter über eine Förderleitung zu einem Brennstoffzellensystem bekannt. Dabei wird mit Hilfe einer Förderpumpe ein konstanter Massenstrom aus dem Vorratsbehälter in die Förderleitung gefördert und der Differenzdruck zwischen Förderleitung und Brennstoffzellensystem mit Hilfe eines Differenzdruckreglers auf einen vorgegebenen Wert eingestellt, so daß die zugeführte Methanol- und/oder Wassermenge beispielsweise durch Variation der Öffnungs- und Schließzeiten eines Magnetventils eingestellt werden kann. Der vorgenannte Stand der Technik offenbart weder ein Verfahren noch eine Vorrichtung zur Regelung der Brennstoffkonzentration im Brennstoffgemisch.

Aus der DE 35 08 153 ist es offenbart, die Konzentration des Brennstoffes innerhalb eines Brennstoffgemisches mit Hilfe einer im Leerlauf betriebenen Brennstoffzelle zu regeln. Dabei wird ausgenutzt, daß das Leerlaufpotential einer Brennstoffzelle von der Brennstoffkonzentration abhängig ist. Diese Art der Regelung ist jedoch sehr aufwendig und damit recht kostenintensiv.

Es ist nun Aufgabe der vorliegenden Erfindung, ein gegenüber dem Stand der Technik einfacheres und gleichzeitig wirkungsvolles Verfahren der eingangs genannten Art sowie ein zur Durchführung dieses Verfahrens geeignetes Brennstoffzellensystem bereitzustellen.

Hinsichtlich eines Verfahrens zur Regelung der Brennstoffkonzentration in einem einen Alkohol oder Ether und Wasser enthaltenden Brennstoffgemisch einer Brennstoffzelle wird diese Aufgabe dadurch gelöst, daß der Brennstoff über einen steuerbaren Brennstoffeinlaß einem Mischraum zugeführt wird, von wo aus das Brennstoffgemisch über eine Brennstoffgemischzuleitung der Brennstoffzelle über eine in Fließrichtung hinter dem Brennstoffeinlaß angeordnete, eine Meßkammer begrenzende, für Wasser und den Brennstoff selektiv permeable Membran zugeführt wird, wobei in der Meßkammer ein flüssiges oder gasförmiges Meßgemisch mit einer, von der aus dem Brennstoffgemisch pro Zeiteinheit in die Meßkammer permeierten Brennstoffmenge abhängigen Brennstoffkonzentration von weniger als 1 Vol.-% oder mehr als 5 Vol.-% hergestellt wird, worauf die Brennstoffkonzentration im Meßgemisch ermittelt und der Brennstoffeinlaß in Abhängigkeit von der Brennstoffkonzentration im Meßgemisch gesteuert wird.

Somit wird die Regelung dadurch erreicht, daß nicht unmittelbar die Brennstoffkonzentration in dem Brennstoffgemisch sondern in einem Meßgemisch festgestellt wird, in dem die Brennstoffkonzentrationen in einem Bereich liegt, der mit hinreichender Genauigkeit und Schnelligkeit mit bekannten Sensoren meßbar ist. Die Brennstoffkonzentration im Meßgemisch ist unmittelbar abhängig von der Brennstoffkonzentration im Brennstoffgemisch, so daß dessen Regelung durch Messungen des Brennstoffgehalts im Meßgemisch möglich ist.

Das erfindungsgemäße Verfahren kann so durchgeführt werden, daß zur Herstellung des Meßgemischs in der Meßkammer eine Trägerflüssigkeit bzw. ein Trägergas zur Verdünnung und/oder Entfernung des permeierten Brennstoffs eingesetzt wird. Der permeierte Brennstoff kann auch an Elektroden in der Meßkammer verbraucht werden, so daß die Entfernung des Brennstoffs durch die Trägerflüssigkeit oder das Trägergas nicht zwingend ist. Durch geeignete Membranen können auch ohne Trägerflüssigkeit oder Trägergas die angegebenen Brennstoffkonzentrationen erreicht werden: So kann die Membran für den Brennstoff um mehr als eine Größenordnung durchlässiger sein als für Wasser, so daß sich in der Meßkammer aus dem permeierten Brennstoff und dem permeierten Wasser ein Meßgemisch mit einer Brennstoffkonzentration von weniger als 1 Vol.-% bis hinab in dem ppm-Bereich bilden kann. Ist umgekehrt die Durchlässigkeit der Membran für Wasser höher als für den Brennstoff, können sich Meßgemische bilden, in denen die Brennstoffkonzentration oberhalb 5, bevorzugt oberhalb 10Vol-% liegt. Hierfür geeignete Membranen sind bekannt (siehe z.B. H. *Strahtmann; "Membrans and Membrane Separation processes", B. Elvers, S. Hawkins, G. Schulz (Ed.);* "*Ullmanns Encyclopedia of Industrial Chemistry", Vol. A 16. VCH, Weinheim, 1990, Seiten 187-263*).

Das erfindungsgemäße Verfahren kann auch so ausgeführt werden, daß die Brennstoffkonzentration des Meßgemischs im Falle von Werten oberhalb 10 oder 5 Vol.-% mittels eines Flüssigkeitssensors bestimmt wird.

Das erfindungsgemäße Verfahren kann auch so ausgeführt werden, daß die Brennstoffkonzentration des Meßgemischs mittels Dichte- oder Viskositätsmessungen bestimmt wird.

Das erfindungsgemäße Verfahren kann auch so ausgeführt werden, daß die Brennstoffkonzentration des Meßgemischs mittels optischer Verfahren, z. B. mittels Infrarotabsorbtion, bestimmt wird. Hierfür geeignete optische Sensoren, insbesondere für die Auswertung der CH-Schwingungen des Brennstoffs, sind ebenfalls bekannt (siehe z.B. *A. Brittain et al. (Ed.) "Optically Based Methods for Process Analysis", S. PIE Proceedings Vol. 1681, Somerset, NJ, USA, 1992*)*.*

Das erfindungsgemäße Verfahren kann auch so ausgeführt werden, daß die Brennstoffkonzentration des Meßgemischs im Falle von Werten unterhalb 1,0 oder 0,1 Vol.-% mittels eines Gassensors bestimmt wird. Ein derartiger Gassensor weist ein Halbleiterelement auf, das seine elektrischen Eigenschaften in Abhängigkeit von der Konzentration des Brennstoffs ändert. Ein solcher Gassensor sowie sein Einsatz in einer durch eine Siliconmembran begrenzten Meßkammer ist im Zusammenhang mit Bioreaktoren ebenfalls bekannt (siehe *FMC-Handbuch der Biotechnologie Kempe GmbH, Berlin).* Weiter ist hier die Bestimmung durch Erfassung der Leitfähigkeit sowie durch Infrarotabsorbtion möglich.

Bei einem Brennstoffzellensystem der eingangs genannten Art wird die obengenannte Aufgabe dadurch gelöst, daß das Brennstoffzellensystem mindestens eine in Fließrichtung des Brennstoffgemisches hinter dem Brennstoffeinlaß angeordnete Meßsonde aufweist, die aus
a) einer Meßkammer,
b) einer die Meßkammer begrenzenden, mit dem Brennstoffgemisch in Kontakt stehenden, für den Brennstoff und/oder Wasser selektiv permeablen Membran, die zur Erzeugung eines flüssigen oder gasförmigen Meßgemisches mit einer von der aus dem Brennstoffgemisch pro Zeiteinheit in die Meßkammer permeierten Brennstoffmenge abhängigen Brennstoffkonzentration von weniger als 1 Vol.-% oder mehr als 5 Vol.-% dient, und
c) einem Sensor zur Bestimmung der Brennstoffkonzentration im Meßgemisch besteht,
und daß das Brennstoffzellensystem Mittel zur Steuerung des Brennstoffeinlasses in Abhängigkeit von der Brennstoffkonzentration im Meßgemisch aufweist.

Die Erfindung sieht ferner vor, daß als Sensor ein Gas-, Flüssigkeits-, Infrarotabsorptions-, Dichtemessungs-, optischer oder Leitfähigkeitmessungs-Sensor vorgesehen ist.

Im Folgenden ist beispielhaft für die erfindungsgemäßen Verfahren sowie die erfindungsgemäßen Brennstoffzellensysteme eine Ausführungsform bzw. eine Ausbildungsform im Zusammenhang mit der Methanolverbrennung beschrieben.

Es zeigt schematisch
- Fig. 1:: den Aufbau eines Methanol als Brennstoff verwendendes Brennstoffzellensystems und
- Fig. 2:: einen vergrößerten Ausschnitt aus der Anordnung gemäß Fig. 1 mit einer an eine Brennstoffgemischzuleitung angekoppelten Meßsonde.

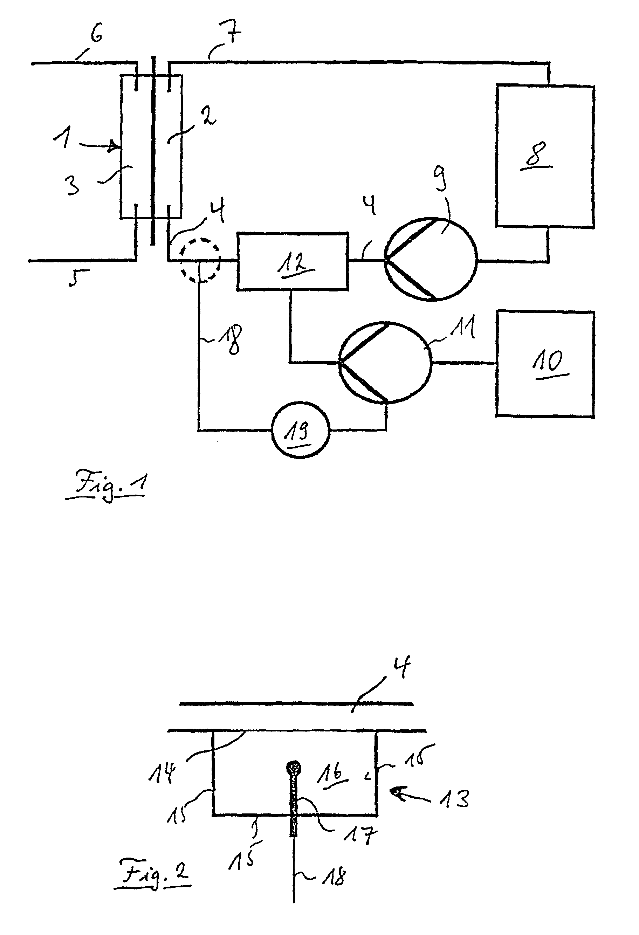

Das Methanol als Brennstoff verwendende Brennstoffzellensystem gemäß Fig. 1 umfaßt eine Brennstoffzelle 1 mit einer Brennstoffkammer 2 und einer Reaktionsstoffkammer 3. Über die Brennstoffgemischzuleitung 4 wird der Brennstoffkammer 2 das aus Methanol und Wasser bestehende Brennstoffgemisch zugeführt, wobei die Methanolkonzentration im Brennstoffgemisch etwa 4 Vol.-% beträgt. Der Reaktionsstoffkammer 3 wird über eine Reaktionsstoffzuleitung Luft zugeführt. Über die Abgasableitung 6 wird das Abgas, ein Wasser-Luft-Gemisch, aus der Reaktionsstoffkammer 3 abgeführt.

Über die Restbrennstoffableitung 7 wird das um den verbrauchten Methanolanteil reduzierte Brennstoffgemisch aus der Brennstoffkammer 2 abgeführt und zu einem Zwischenvorrat 8 gebracht. An den Zwischenvorrat 8 ist eine Rückführpumpe 9 angeschlossen, über die das im Methanolgehalt reduzierte Brennstoffgemisch in die Brennstoffgemischzuleitung 4 und somit zur Brennstoffkammer 2 gepumpt wird. Das Brennstoffgemisch wird somit im Kreislauf geführt.

Damit das in die Brennstoffkammer 2 gelangende Brennstoffgemisch die erforderliche Methanolkonzentration aufweisen kann, wird aus einem Methanolvorrat 10 über eine Methanolpumpe 11 Methanol in einen Mischraum 12 gepumpt, wo es sich mit dem im Methanolgehalt reduzierten Brennstoffgemisch aus dem Zwischenvorrat 8 vermischt. Der Mischraum 12 ist in Fig. 1 symbolisch vergrößert dargestellt, kann jedoch tatsächlich auch lediglich ein Teil der Brennstoffgemischzuleitung 4 sein. Die Methanolpumpe 11 ist in ihrer Pumpleistung steuerbar.

Um einen möglichst konstanten Methanolgehalt des in die Brennstoffkammer 3 eintretenden Brennstoffgemisches gewährleisten zu können, wird die Methanolkonzentration geregelt. Hierfür wird eine von der Methanolkonzentration im Brennstoffgemisch direkt abhängige Größe gemessen. In Fig. 2 ist der in Fig. 1 gestrichelt eingekreiste Bereich vergrößert dargestellt. Fig. 2 zeigt eine Meßsonde 13, die auf der Brennstoffgemischzuleitung 4 aufgesetzt ist. Die Meßsonde 13 weist eine Membran 14 auf, die mit dem vorbeiströmenden Brennstoffgemisch in unmittelbarem Kontakt steht. Die Membran 14 ist für Wasser und Methanol derartig selektiv durchlässig, daß sich in einer durch die Wände 15 der Meßsonde 13 sowie der Membran 14 begrenzten Meßkammer 16 ein aus Wasser und Methanol bestehendes Meßgemisch mit einem Methanolgehalt im ppm-Bereich bildet. In der Meßkammer 16 befindet sich ein Methanolsensor 17, der in diesem Konzentrationsbereich hochwirksam ist. Die vom Methanolsensor 17 in Abhängigkeit von der Methanolkonzentration im Meßgemisch erzeugte Meßgröße wird über die Meßleitung 18 an einen Regler 19 (Fig. 1) weitergegeben, der die Methanolpumpe 11 somit in Abhängigkeit von der Methanolkonzentration im Meßgemisch steuert. Da die Methanolkonzentration im Meßgemisch direkt von der Methanolkonzentration im Brennstoffgemisch in der Brennstoffzuleitung 4 am Ort der Meßsonde 13 abhängt, kann mit dieser Regelung die Methanolkonzentration im Brennstoffgemisch weitgehend konstant gehalten werden.

### Bezugszeichenliste

- 1: Brennstoffzelle
- 2: Brennstoffkammer
- 3: Reaktionsstoffkammer
- 4: Brennstoffgemischzuleitung
- 5: Reaktionsstoffzuleitung
- 6: Abgasableitung
- 7: Restbrennstoffableitung
- 8: Zwischenvorrat
- 9: Rückführpumpe
- 10: Methanolvorrat
- 11: Methanolpumpe
- 12: Mischraum
- 13: Meßsonde
- 14: Membran
- 15: Wand
- 16: Meßkammer
- 17: Methanolsensor
- 18: Meßleitung
- 19: Regler

## Patentansprüche

1. Verfahren zur Regelung der Brennstoffkonzentration in einem Brennstoffgemisch für eine Brennstoffzelle, das von einem Alkohol oder einem Ether als Brennstoff und Wasser gebildet wird, **dadurch gekennzeichnet, daß**
der Brennstoff über einen steuerbaren Brennstoffeinlaß (11) einem Mischraum (12) zugeführt wird, von wo aus das Brennstoffgemisch über eine Brennstoffgemischzuleitung (4) der Brennstoffzelle (1) über eine in Fließrichtung hinter dem Brennstoffeinlaß (11) angeordnete, eine Meßkammer (16) begrenzende, für Wasser und den Brennstoff selektiv permeable Membran (14) zugeführt wird, wobei in der Meßkammer (16) ein flüssiges oder gasförmiges Meßgemisch mit einer, von der aus dem Brennstoffgemisch pro Zeiteinheit in die Meßkammer (16) permeierten Brennstoffmenge abhängigen Brennstoffkonzentration von weniger als 1 Vol.-% oder mehr als 5 Vol.-% hergestellt wird, worauf die Brennstoffkonzentration im Meßgemisch ermittelt und der Brennstoffeinlaß (11) in Abhängigkeit von der Brennstoffkonzentration im Meßgemisch gesteuert wird.

2. Verfahren nach Anspruch 1, **dadurch gekennzeichnet, daß** in der Meßkammer (16) ein flüssiges oder gasförmiges Meßgemisch mit einer von der aus dem Brennstoffgemisch pro Zeiteinheit in die Meßkammer (16) permeierten Brennstoffmenge abhängigen Brennstoffkonzentration von weniger als 0,1 Vol.-% hergestellt wird.

3. Verfahren nach Anspruch 1, **dadurch gekennzeichnet, daß** in der Meßkammer (16) ein flüssiges oder gasförmiges Meßgemisch mit einer von der aus dem Brennstoffgemisch pro Zeiteinheit in die Meßkammer (16) permeierten Brennstoffmenge abhängigen Brennstoffkonzentration von mehr als 10 Vol.-% hergestellt wird.

4. Verfahren nach einem der vorhergehenden Ansprüche, **dadurch gekennzeichnet, daß** zur Herstellung des Meßgemischs in der Meßkammer (16) eine Trägerflüssigkeit oder ein Trägergas zur Verdünnung und/oder Entfernung des permeierten Brennstoffs eingesetzt wird.

5. Verfahren nach einem der vorhergehenden Ansprüche, **dadurch gekennzeichnet, daß** die Brennstoffkonzentration des Meßgemischs im Falle von Werten oberhalb 10 oder 5 Vol.-% mittels eines Flüssigkeitssensors bestimmt wird.

6. Verfahren nach Anspruch 5, **dadurch gekennzeichnet, daß** die Brennstoffkonzentration des Meßgemischs mittels Dichte- oder Viskositätsmessungen bestimmt wird.

7. Verfahren nach Anspruch 5, **dadurch gekennzeichnet, daß** die Brennstoffkonzentration des Meßgemischs mittels optischer Verfahren bestimmt wird.

8. Verfahren Anspruch 7, **dadurch gekennzeichnet, daß** die Brennstoffkonzentration des Meßgemischs mittels Infrarotabsorbtion bestimmt wird.

9. Verfahren nach einem der Ansprüche 1 bis 4, **dadurch gekennzeichnet, daß** die Brennstoffkonzentration des Meßgemischs im Falle von Werten unterhalb 1,0 oder 0,1 Vol.-% mittels eines Gassensors bestimmt wird.

10. Verfahren nach Anspruch 9, **dadurch gekennzeichnet, daß** die Brennstoffkonzentration des Meßgemischs mittels optischer Verfahren oder durch Erfassung der Leitfähigkeit bestimmt wird.

11. Verfahren Anspruch 9, **dadurch gekennzeichnet, daß** die Brennstoffkonzentration des Meßgemischs mittels Infrarotabsorbtion bestimmt wird.

12. Brennstoffzellensystem, enthaltend mindestens eine, mit einem aus einem Alkohol oder einem Ether als Brennstoff und Wasser bestehenden Brennstoffgemisch betreibbare Brennstoffzelle (1), sowie mindestens einen mit jeweils einem steuerbaren Brennstoffeinlaß (11) verbundenen Mischraum (12) und mindestens eine, den mindestens einen Mischraum (12) jeweils mit der mindestens einen Brennstoffzelle (1) verbindende Brennstoffgemischzuleitung (4),
**dadurch gekennzeichnet, daß**
das Brennstoffzellensystem mindestens eine in Fließrichtung des Brennstoffgemisches hinter dem Brennstoffeinlaß (11) angeordnete Meßsonde (13) aufweist, die aus
a) einer Meßkammer (16),
b) einer die Meßkammer (16) begrenzenden, mit dem Brennstoffgemisch in Kontakt stehenden, für den Brennstoff und/oder Wasser selektiv permeablen Membran (14), die zur Erzeugung eines flüssigen oder gasförmigen Meßgemisches mit einer von der aus dem Brennstoffgemisch pro Zeiteinheit in die Meßkammer (16) permeierten Brennstoffmenge abhängigen Brennstoffkonzentration von weniger als 1 Vol.-% oder mehr als 5 Vol.-% dient, und
c) einem Sensor (17) zur Bestimmung der Brennstoffkonzentration im Meßgemisch besteht,
und daß das Brennstoffzellensystem Mittel (19) zur Steuerung des Brennstoffeinlasses (11) in Abhängigkeit von der Brennstoffkonzentration im Meßgemisch aufweist.

13. Brennstoffzellensystem nach Anspruch 12, **dadurch gekennzeichnet, daß** als Sensor (17) ein Gas-, Flüssigkeits-, Infrarotabsorptions-, Dichtemessungs-, optischer oder Leitfähigkeitmessungs-Sensor vorgesehen ist.

## Claims

1. Method for regulating the fuel concentration in a fuel mixture for a fuel cell which is formed by an alcohol or an ether as the fuel and water, **characterized in that** the fuel is fed via a controllable fuel inlet (11) to a mixing space (12), from where the fuel mixture is fed, via a fuel-mixture feedline (4), to the fuel cell (1) via a membrane (14) which is arranged downstream of the fuel inlet (11), as seen in the direction of flow, delimits a measurement chamber (16) and is selectively permeable to water and the fuel, a liquid or gaseous measurement mixture with a fuel concentration of less than 1% by volume or more than 5% by volume, depending on the quantity of fuel which permeates into the measurement chamber (16) from the fuel mixture per unit time, being produced in the measurement chamber (16), whereupon the fuel concentration in the measurement mixture is determined and the fuel inlet (11) is controlled as a function of the fuel concentration in the measurement mixture.

2. Method according to Claim 1, **characterized in that** a liquid or gaseous measurement mixture with a fuel concentration of less than 0.1% by volume depending on the quantity of fuel which has permeated into the measurement chamber (16) from the fuel mixture per unit time is produced in the measurement chamber (16) .

3. Method according to Claim 1, **characterized in that** a liquid or gaseous measurement mixture with a fuel concentration of more than 10% by volume which is dependent on the quantity of fuel which has permeated into the measurement chamber (16) from the fuel mixture per unit time is produced in the measurement chamber (16).

4. Method according to one of the preceding claims, **characterized in that** to produce the measurement mixture in the measurement chamber (16) a carrier liquid or a carrier gas is used to dilute and/or remove the permeated fuel.

5. Method according to one of the preceding claims, **characterized in that** the fuel concentration of the measurement mixture, in the case of values above 10 or 5% by volume, is determined by means of a liquid sensor.

6. Method according to Claim 5, **characterized in that** the fuel concentration of the measurement mixture is determined by means of density or viscosity measurements.

7. Method according to Claim 5, **characterized in that** the fuel concentration of the measurement mixture is determined by means of optical methods.

8. Method [lacuna] Claim 7, **characterized in that** the fuel concentration of the measurement mixture is determined by means of infrared absorption.

9. Method according to one of Claims 1 to 4, **characterized in that** the fuel concentration of the measurement mixture, in the case of values below 1.0 or 0.1% by volume, is determined by means of a gas sensor.

10. Method according to Claim 9, **characterized in that** the fuel concentration of the measurement mixture is determined by means of optical methods or by determining the conductivity.

11. Method [lacuna] Claim 9, **characterized in that** the fuel concentration of the measurement mixture is determined by means of infrared absorption.

12. Fuel cell system, containing at least one fuel cell (1), which can be operated with a fuel mixture consisting of an alcohol or an ether as fuel and water, and at least one mixing space (12), which is connected to in each case one controllable fuel inlet (11), and at least one fuel-mixture feedline (4), which connects the at least one mixing space (12) to in each case the at least one fuel cell (1), **characterized in that** the fuel cell system has at least one measurement probe (13), which is arranged downstream of the fuel inlet (11), as seen in the direction of flow of the fuel mixture, and comprises
a) a measurement chamber (16),
b) a membrane (14) which delimits the measurement chamber (16), is in contact with the fuel mixture, is selectively permeable to the fuel and/or water and is used to produce a liquid or gaseous measurement mixture with a fuel concentration of less than 1% by volume or more than 5% by volume depending on the quantity of fuel which has permeated into the measurement chamber (16) from the fuel mixture per unit time, and
c) a sensor (17) for determining the fuel concentration in the measurement mixture,
and **in that** the fuel cell system has means (19) for controlling the fuel inlet (11) as a function of the fuel concentration in the measurement mixture.

13. Fuel cell system according to Claim 12, **characterized in that** a gas, liquid, infrared absorption, density measurement, optical or conductivity measurement sensor is provided as the sensor (17).

## Revendications

1. Procédé permettant de régler la concentration en combustible d'un mélange combustible pour une pile à combustible formé par un alcool ou un éther servant de combustible et par de l'eau, **caractérisé en ce que**
le combustible alimente, par le biais d'une admission de combustible commandable (11), une chambre de mélange (12), de laquelle le mélange combustible est acheminé, par le biais d'une conduite d'alimentation en mélange combustible (4) à la pile à combustible (1) par le biais d'une membrane perméable de manière sélective à l'eau et au combustible (14), disposée dans la direction de l'écoulement derrière l'admission de combustible (11) et limitant une chambre de mesure (16), un mélange de mesure liquide ou gazeux étant produit dans la chambre de mesure (16), avec une concentration en combustible dépendant de la quantité de combustible ayant passé du mélange combustible par unité de temps dans la chambre de mesure (16), de moins de 1 % en volume ou de plus de 5 % en volume, la concentration en combustible dans le mélange de mesure étant déterminée et l'admission de combustible (11) étant commandée en. fonction de la concentration en combustible dans le mélange de mesure.

2. Procédé selon la revendication 1, **caractérisé en ce qu'**un mélange de mesure liquide ou gazeux avec une concentration en combustible de moins de 0,1 % en volume, dépendant de la quantité de combustible ayant pénétré du mélange combustible par unité de temps dans la chambre de mesure (16) est produit dans la chambre de mesure (16).

3. Procédé selon la revendication 1, **caractérisé en ce qu'**un mélange de mesure liquide ou gazeux avec une concentration en combustible de plus de 10 % en volume, dépendant de la quantité de combustible ayant pénétré du mélange combustible par unité de temps dans la chambre de mesure (16) est produit dans la chambre de mesure (16).

4. Procédé selon l'une quelconque des revendications précédentes, **caractérisé en ce que** pour la préparation du mélange de mesure dans la chambre de mesure (16), on utilise un liquide porteur ou un gaz porteur pour diluer et/ou éliminer le combustible ayant pénétré.

5. Procédé selon l'une quelconque des revendications précédentes, **caractérisé en ce que** la concentration en combustible du mélange de mesure est déterminée au moyen d'un capteur de liquide dans le cas de valeurs au-dessus de 10 ou 5 % en volume.

6. Procédé selon la revendication 5, **caractérisé en ce que** la concentration en combustible dans le mélange de mesure est déterminée au moyen de mesures de densité ou de viscosité.

7. Procédé selon la revendication 5, **caractérisé en ce que** la concentration en combustible dans mélange de mesure est déterminée au moyen de procédés optiques.

8. Procédé selon la revendication 7, **caractérisé en ce que** la concentration en combustible dans le mélange de mesure est déterminée par absorption d'infrarouge.

9. Procédé selon l'une quelconque des revendications 1 à 4, **caractérisé en ce que** la concentration en combustible dans le mélange de mesure est déterminée au moyen d'un capteur de gaz dans le cas de valeurs en dessous de 1,0 ou 0,1 % en volume.

10. Procédé selon la revendication 9, **caractérisé en ce que** la concentration en combustible dans le mélange de mesure est déterminée au moyen de procédés optiques ou par détection de la conductibilité.

11. Procédé selon la revendication 9, **caractérisé en ce que** la concentration en combustible dans le mélange de mesure est déterminée par absorption d'infrarouge.

12. Système de piles à combustible, contenant au moins une pile à combustible (1) pouvant fonctionner avec un mélange combustible se composant d'un alcool ou d'un éther en tant que combustible et d'eau, ainsi qu'au moins une chambre de mélange (12) connectée à chaque fois à une admission de combustible (11) commandable et au moins une conduite d'alimentation en mélange combustible (4) reliant l'au moins une chambre de combustion (12) à chaque fois à l'au moins une pile à combustible (1),
**caractérisé en ce que**
le système de piles à combustible présente au moins une sonde de mesure (13) disposée dans la direction de l'écoulement du mélange combustible derrière l'admission de combustible (11), laquelle se compose
a) d'une chambre de mesure (16),
b) d'une membrane (14) perméable de manière sélective au combustible et/ou à l'eau, limitant la chambre de mesure (16), en contact avec le mélange combustible, qui sert à produire un mélange de mesure liquide ou gazeux avec une concentration en combustible inférieure à 1 % en volume ou supérieure à 5 % en volume, dépendant de la quantité de combustible ayant pénétré du mélange de combustible par unité de temps dans la chambre de mesure (16), et
c) d'un capteur (17) pour déterminer la concentration en combustible dans le mélange de mesure,
et **en ce que** le système de piles à combustible présente des moyens (19) pour la commande de l'admission de combustible (11) en fonction de la concentration de combustible dans le mélange de mesure.

13. Système de piles à combustible selon la revendication 12, **caractérisé en ce que** l'on prévoit comme capteur (17) un capteur de gaz, de liquide, d'absorption d'infrarouge, de mesure de densité, optique ou de mesure de conductibilité.
